# EUROPÄISCHE PATENTANMELDUNG

(11) **EP 2 489 915 A1**
(43) Veröffentlichungstag der Anmeldung: **22.08.2012**
(21) Anmeldenummer: 11474002.0
(22) Anmeldetag: 15.02.2011
(51) Int. Cl.: F16L 27/053, F16L 27/06

(54) **Flanschverbindung**

(71) Anmelder: Kucár, Ivan, 040 01 Kosice (SK)
(72) Erfinder: Kucár, Ivan, 040 01 Kosice (SK)

(57) **Zusammenfassung**

1. Die Flanschverbindung, bestehend aus den Rohrleitungen, Kugelflächen, Flanschen, Dichtung, Klemmverbindung und Übergängen zeichnet sich dadurch aus, dass die innere Oberfläche der Rohrleitung (2) mit der Kugelfläche (8) versehen ist, welche durch den Übergang (11) mit dem Flansch (4) versehen ist und dass die äußere Oberfläche der Rohrleitung (1) mit der Kugelfläche (9) versehen ist und dass der Flansch (5) durch den Übergang (10) mit der Kugelfläche (3) versehen ist und dass die Kugelfläche (9) der Rohrleitung (1) im Inneren der Kugelfläche (8) der Rohrleitung (2) und der Kugelfläche (3) vom Flansch (5) eingestellt ist und dass der Flansch (5) und der Flansch (4) oder der Körper (12) mit der Klemmverbindung (7) geklemmt ist und dass im Raum zwischen der Kugelfläche (9) der Rohrleitung (1), Übergang (11) vom Flansch (4) und Übergang (10) vom Flansch (5) die Dichtung (6) eingestellt ist.

## Beschreibung

### Bereich Technik

Die Erfindung betrifft die Flanschverbindung, welche einfache Ausrichtung von Rohren bei der Montage von Rohrleitungen ermöglicht.

### Bisheriger Zustand der Technik

Für die Verbindung von Rohren werden bei der Montage Ausgleicher eingesetzt, welche die Kompensation von Ungenauigkeiten der gegenseitigen Lage von Rohren ermöglichen oder die Rohre werden bei der Montage gegenseitig ausgerichtet und nach der Ausrichtung verschweißt.

Beide Verfahren sind ziemlich arbeitsaufwendig und teuer.

### Das Wesen der Erfindung

Die vorgenannten Nachteile werden durch die Flanschverbindung laut Erfindung behoben, die sich dadurch auszeichnet, dass die innere Oberfläche einer Rohrleitung mit Kugelfläche versehen ist, welche durch den Übergang mit dem Flansch versehen ist und dass die äußere Oberfläche der anderen Rohrleitung mit der Kugelfläche versehen ist und der weitere Flansch durch den Übergang mit der Kugelfläche versehen ist und dass die Kugelfläche der anderen Rohrleitung sich im Inneren der Kugelfläche der ersten Rohrleitung und der Kugelfläche vom Flansch befindet und die Flanschen werden mit Klemmverbindung festgeklemmt und im Raum zwischen die Kugelfläche der zweiten Rohrleitung und die Übergänge der Flanschen Dichtung eingestellt ist und dass in der Flanschverbindung die Mittelpunkte der Kugelfläche der ersten und zweiten Rohrleitung und der Flanschkugelfläche identisch sind und befinden sich an der Achse der ersten und zweiten Rohrleitung und dass bei den Armaturen und Anlagen die Kugelfläche der ersten Rohrleitung und der Übergang Bestandteile des Armaturenkörpers oder Anlage sind und dass die Flanschkugelfläche mit der Kegelfläche versehen ist, dass als Klemmverbindung ein Sicherungsring eingesetzt ist, dass als Dichtung elastisches Material verwendet ist und der Raum zwischen den Übergängen der Flanschen und der Raum zwischen dem Übergang und der Kugelfläche der Rohrleitung mit elastischem Material der Dichtung ausgefüllt ist und dass der Raum zwischen den Übergängen der Flanschen und der Raum zwischen dem Übergang und der Kugelfläche der Rohrleitung mit Stützringen ausgefüllt ist und die Dichtung an die Stützringe anliegt.

Der Vorteil der beschriebenen Flanschverbindung laut Erfindung ist die Möglichkeit der Ausrichtung der Rohrleitung bei der Montage in zwei Richtungen. Im Vergleich mit klassischen Flanschen sind die Flanschen klein und ihre Größe ist ausschließlich von den Ansprüchen der Klemmverbindung abhängig. Es ist nicht erforderlich alleine Klemmverbindung für die Biegebeanspruchung und für die Dichtungskraft wie bei den klassischen Flanschen zu dimensionieren.

Der Vorteil wird bei der Anwendung der Erfindung bei den Armaturen oder Anlagen, welche in der Regel mit den Flanschen versehen werden noch markanter. Der Abguss der Körper wird einfacher und es kommt zur Gewichtreduktion beim Abguss.

Die Flanschverbindung gemäß Erfindung reagiert als elastisches Gelenk und ermöglicht die Winkelanpassung der Ablenkung der Rohrleitung bei der Änderung der Lage infolge der Bodensetzung, Erdbebungen usw., womit die zusätzliche Biegungsbeanspruchung der Flanschverbindung ausgeschlossen wird.

### Übersicht der Bilder in den Zeichnungen

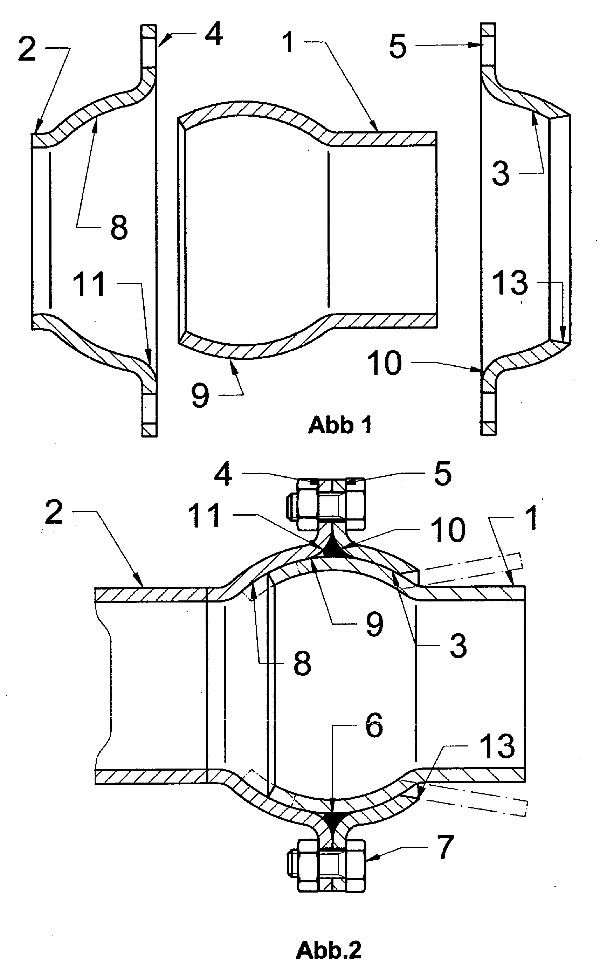

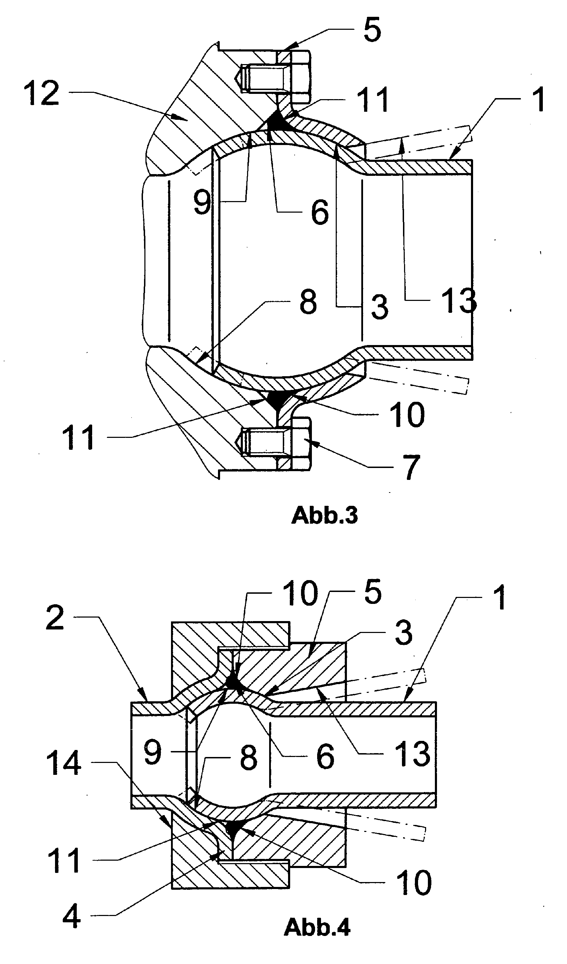

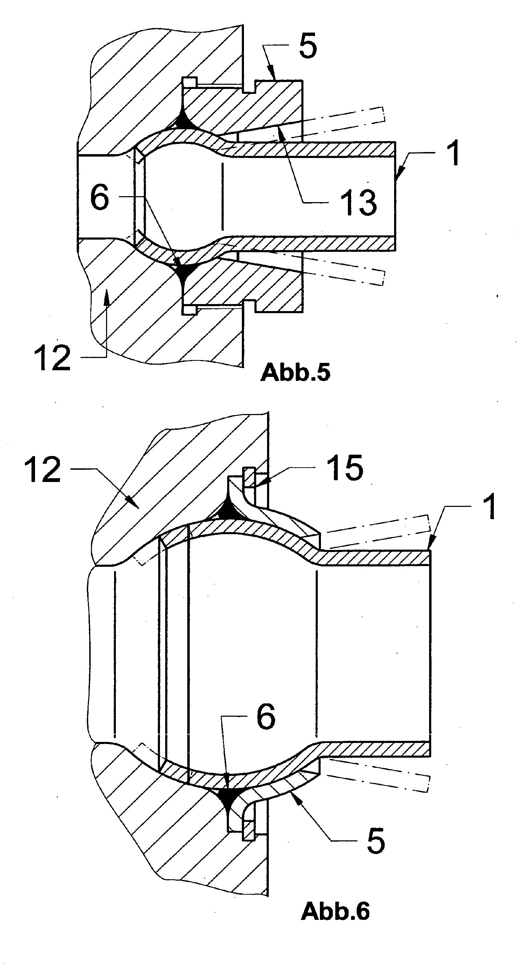

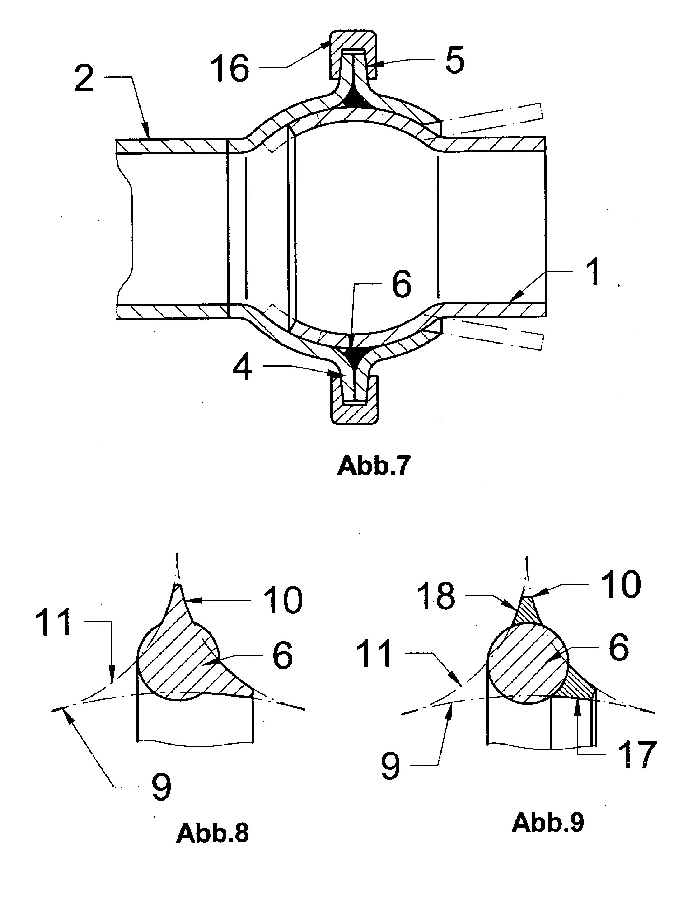

In der Abb. 1 sind einzelne Teile der Flanschverbindung und ihre Funktionsteile dargestellt, in der Abb. 2 ist die Flanschverbindung mit dem Einsatz in den Rohrleitungen dargestellt, in der Abb. 3 ist die Flanschverbindung dargestellt, bei welcher eine Rohrführung durch Armaturkörper oder Körper einer Anlage ersetzt ist, an welche die Rohrleitung angeschlossen wird, in der Abb. 4 ist die Flanschverbindung dargestellt, wo als Klemmverbindung Mutter und Schraube verwendet wird, wobei die Schraube eine der Flanschverbindungen ersetzt, in der Abb. 5 ist die Flanschverbindung dargestellt, bei welcher der Flansch als Schraube gelöst ist, die im Armaturkörper oder im Körper der Anlage eingeschraubt ist. In der Abb. 6 ist die Flanschverbindung dargestellt, bei welcher ein Sicherungsring als Klemmverbindung verwendet wird und in der Abb. 7 ist die Flanschverbindung dargestellt, bei welcher als Klemmverbindung der Klemmbügel verwendet wird. In der Abb. 8 und Abb. 9 sind die Dichtungen für die Flanschverbindung dargestellt.

### Beispiel der Umsetzung der Erfindung

Der Einsatz der Flanschverbindung gemäß Patentansprüchen ist bei der Montage der Rohrleitungen möglich.

In der Abb. 1 sind einzelne Teile der Flanschverbindung und ihre Funktionsteile dargestellt, welche aus der Rohrleitung 1 mit angepasstem Endstück, Rohrleitung 2 mit angepasstem Endstück und aus Flansch 5 bestehen. Ende der Rohrleitung 1 ist mit der Kugelfläche 9 versehen. Die Rohrleitung 2 ist mit der Kugelflächen 8, dem Flansch 4 mit dem Übergang 11 zwischen dem Flansch 4 und der Kugelfläche 8 versehen. Der Flansch 5 ist mit der Kugelfläche 3, mit dem Übergang 10 zum Flansch 5 und Kegelabfassung 13 versehen.

In der Abb. 2 ist die Flanschverbindung dargestellt, welche in den Rohrleitungen eingesetzt ist, die aus den Rohrleitungen 1 und 2, Kugelflächen 3, 8 und 9, Übergängen 10 und 11, Flanschen 4 und 5, Dichtung 6, Klemmverbindung 7 und Kugelfläche 13 besteht.

Innere Oberfläche der Rohrleitung 2 übergeht in die Kugelfläche 8 und durch den Übergang 11 in den Flansch 4. Äußere Oberfläche der Rohrleitung 1 übergeht in die Kugelfläche 9. Der Flansch 5 übergeht durch den Übergang 10 in die Kugelfläche 3. Die Kugelfläche 8 der Rohrleitung 1 ist in die Kugelflächen 3 vom Flansch 5 und die Kugelfläche 8 der Rohrleitung 2 eingestellt. Ihre gegenseitige Verbindung ermöglicht die Klemmverbindung 7, in der Abbildung in der Ausführung Schraube und Mutter dargestellt.

Zwischen die Übergänge 10 und 11 und die Kugelfläche 9 ist die Dichtung 6 eingestellt, welche die Dichtigkeit der Verbindung gewährt.

Die Kugelflächen 8, 9 und 3 haben einen gemeinsamen Mittelpunkt, der sich an der Achse der Rohrleitungen 1 und 2 befindet, was ihre gegenseitige Ausrichtung in zwei Achsen ermöglicht.

Die Kugelfläche 3 übergeht in die Kegelfläche 13, welche als Anschlag für maximale Ablenkung bei der Montage der Rohrleitung dient.

In der Abb. 3 ist die Flanschverbindung dargestellt, bei welcher die Kugelfläche 8 und der Übergang 11 Bestandteile des Körpers 12 der Armatur oder der Anlage sind.

In der Abb. 4 ist die Flanschverbindung dargestellt, welche in den Rohrleitungen angewandt wird und aus den Rohrleitungen 1 und 2 besteht, bei welcher als Klemmverbindung Mutter 14 verwendet wird und Flansch 5 mit dem Gewinde für die Verschraubung in die Mutter 14 versehen ist. Der Flansch 5 ist mit Kugelfläche 3 und Übergang 10 versehen.

In der Abb. 5 ist die Flanschverbindung dargestellt, bei welcher der Flansch 5 als Schraube, die im Armaturkörper 12 oder im Körper der Anlage eingeschraubt ist, gelöst ist. Der Flansch 5 ist mit Übergangsstück 10 und Kugelfläche 3 versehen.

In der Abb. 6 ist die Flanschverbindung dargestellt, bei welcher der Flansch 5 in den Körper 12 eingelegt ist und gegen Freistellung mit Sicherungsring 15 gesichert ist. Während der Montage wird elastische Dichtung 6 mit dem Flansch 5 zusammengedrückt und der Flansch 5 wird mit dem Sicherungsring 15 gesichert. Die Klemmung der Verbindung wird durch Spannkraft der Dichtung 6 gesichert.

In der Abb. 7 ist die Flanschverbindung dargestellt bei welcher als Klemmverbindung der Klemmbügel 16 verwendet wird. Die äußeren Stirnen von Flanschen 4 und 5 und die inneren Stirnen vom Klemmbügel 16 sind mit der Schrägung versehen. Mit der Klemmung durch den Klemmbügel 16 sind die Flanschen 4 und 5 über die Schrägungen gegeneinander gedrückt.

In der Abb. 8 ist die Dichtung 6 der Flanschverbindung dargestellt, bei welcher als Dichtung 6 elastisches Material verwendet ist und der Raum zwischen den Übergängen 10 und 11 von Flanschen 4 und 5 und der Raum zwischen dem Übergang 11 vom Flansch 5 und der Kugelfläche 9 der Rohrleitung 1 mit elastischem Material der Dichtung 6 ausgefüllt ist. Die Ausfüllung von vorgenannten Räumen ist für die Dichtigkeit erforderlich. Bei der Nichtausfüllung von vorgenannten Räumen, bei der Druckerhöhung, kommt es zur Verformung der elastischen Dichtung 6 und zu ihrer Verdrängung in die vorgenannten Räume und anschließend zum Verlust der Dichtigkeit der Flanschverbindung.

In der Abbildung 9 ist die Dichtung 6 der Flanschverbindung dargestellt, bei welcher als Dichtung 6 elastisches Material verwendet ist und der Raum zwischen den Übergängen 10 und 11 der Flanschen 4 und 5 und der Raum zwischen dem Übergang 11 vom Flansch 5 und der Kugelfläche 9 der Rohrleitung 1 mit den Stützringen 17 und 18 ausgefüllt ist und die Dichtung 6 an die Stützringe 17 und 18 anliegt.

**Verzeichnis der Bezugszeichen**
- 1 -: Rohrleitung
- 2 -: Rohrleitung
- 3 -: Kugelfläche
- 4 -: Flansch
- 5 -: Flansch
- 6 -: Dichtung
- 7 -: Klemmverbindung
- 8 -: Kugelfläche
- 9 -: Kugelfläche
- 10 -: Übergang
- 11 -: Übergang
- 12 -: Körper
- 13 -: Kegelfläche
- 14 -: Mutter
- 15 -: Sicherungsring
- 16 -: Klemmbügel
- 17 -: Stützring
- 18 -: Stützring

## Patentansprüche

1. Die Flanschverbindung, bestehend aus den Rohrleitungen, Kugelflächen, Flanschen, Dichtung, Klemmverbindung und Übergängen, zeichnet sich dadurch aus, dass die innere Oberfläche der Rohrleitung (2) mit der Kugelfläche (8) versehen ist, welche durch den Übergang (11) mit dem Flansch (4) versehen ist und dass die äußere Oberfläche der Rohrleitung (1) mit der Kugelfläche (9) versehen ist und dass der Flansch (5) durch den Übergang (10) mit der Kugelfläche (3) versehen ist und dass die Kugelfläche (9) der Rohrleitung (1) im Inneren der Kugelfläche (8) der Rohrleitung (2) und der Kugelfläche (3) vom Flansch (5) eingestellt ist und dass der Flansch (5) und der Flansch (4) oder der Körper (12) mit der Klemmverbindung (7) geklemmt sind und dass im Raum zwischen der Kugelfläche (9) der Rohrleitung (1), Übergang (11) vom Flansch (4) und der Übergang (10) vom Flansch (5) die Dichtung (6) eingestellt ist.

2. Die Flanschverbindung gemäß Punkt 1 zeichnet sich dadurch aus, dass in der Flanschverbindung die Mittelpunkte der Kugelfläche (9) der Rohrleitung (1), der Kugelfläche (8) der Rohrleitung (2) und der Kugelfläche (3) vom Flansch (5) identisch sind und befinden sich an der Achse der Rohrleitung (2) und der Rohrleitung (1).

3. Die Flanschverbindung gemäß Ansprüchen 1 und 2 zeichnet sich dadurch aus, dass die Kugelfläche (3) vom Flansch (5) mit der Kegelfläche (13) versehen ist.

4. Die Flanschverbindung gemäß Ansprüchen 1, 2 und 3 zeichnet sich dadurch aus, dass als Klemmverbindung (7) der Klemmbügel (16) verwendet ist.

5. Die Flanschverbindung gemäß Ansprüchen 1, 2 und 3 zeichnet sich dadurch aus, dass die Kugelfläche (8) und der Übergang (11) Bestandteile des Körpers (12) sind.

6. Die Flanschverbindung gemäß Ansprüchen 1, 2, 3 und 5 zeichnet sich dadurch aus, dass als Klemmverbindung (7) der Sicherungsring (15) und die Dichtung (6) verwendet werden.

7. Die Flanschverbindung gemäß vorstehenden Ansprüchen zeichnet sich dadurch aus, dass als Dichtung (6) elastisches Material verwendet ist und der Raum zwischen den Übergängen (10) und (11) der Flanschen (4) und (5) und der Raum zwischen dem Übergang (11) vom Flansch (5) und der Kugelfläche (9) der Rohrleitung (1) voll oder teilweise mit elastischem Material der Dichtung (6) ausgefüllt ist.

8. Die Flanschverbindung gemäß vorstehenden Ansprüchen zeichnet sich dadurch aus, dass als Dichtung (6) elastisches Material verwendet ist und der Raum zwischen den Übergängen (10) und (11) der Flanschen (4) und (5) und der Raum zwischen dem Übergang (11) vom Flansch (5) und der Kugelfläche (9) der Rohrleitung (1) voll oder teilweise mit Stützringen (17) und (18) ausgefüllt ist und die Dichtung (6) an die Stützringe (17) und (18) anliegt.
